# EUROPEAN PATENT SPECIFICATION

(11) **EP 3 904 605 B1**
(45) Date of publication and mention of the grant of the patent: **24.12.2025**
(21) Application number: 20776449.9
(22) Date of filing: 24.03.2020
(51) Int. Cl.: E02F 9/02, B62D 25/18

(54) **WORK VEHICLE AND METHOD FOR ATTACHING AND DETACHING MUDGUARD**
ARBEITSFAHRZEUG UND VERFAHREN ZUM BEFESTIGEN UND LÖSEN EINES KOTFLÜGELS
VÉHICULE DE CHANTIER ET PROCÉDÉ DE FIXATION ET DE DÉTACHEMENT DE GARDE-BOUE

(30) Priority: 26.03.2019 JP 2019057879
(43) Date of publication of application: 03.11.2021
(73) Proprietor: Komatsu Ltd., Minato-ku Tokyo 107-8414 (JP)
(72) Inventor: SUZUKI, Junichiro, Tokyo 107-8414 (JP)
(74) Representative: Flügel Preissner Schober Seidel
(86) International application number: PCT/JP2020/013123
(87) International publication number: WO 2020/196552

(56) References cited:
- EP-A1- 2 193 981
- CN-U- 205 858 531
- FR-A1- 2 791 627
- JP-U- S 476 531
- JP-U- S53 108 043
- US-A- 4 180 230
- US-A- 4 735 428
- US-A- 4 735 428
- US-B1- 9 802 652

## Description

### Technical Field

The present invention relates to a work vehicle with a mud guard.

### Background Art

JP H11-321720 A discloses a mud guard device provided with a fixed mud guard fixed to a vehicle body and an additional mud guard attached to the fixed mud guard, as a mud guard device disposed on the outer periphery of a traveling wheel of a work vehicle.

The additional mud guard is fixed to the fixed mud guard with bolts. When performing maintenance work, the additional mud guard is detached from the fixed mud guard by taking out the bolts.

Further prior art is know from FR 2 791 627 A1, EP 2 193 981 A1, US 4 735 428 A and CN 205 858 531 U1. FR 2 791 627 A1 discloses the features of the preambles of claims 1 and 2. EP 2 193 981 A1 discloses the features of the preambles of claims 10 and 11.

### Summary of the Invention

### Problem to be Resolved by the invention

However, the fixed mud guard cannot be attached and detached and there is also a need to use a tool for taking out the bolts when attaching or detaching the additional mud guard which is troublesome in the mud guard device described in JP H11-321720 A.

An object of the present invention is to provide a work vehicle and a method for attaching/detaching the mud guard with which a mud guard can be easily attached and detached.

### Means for Resolving the Problem

A work vehicle according to a first aspect of the invention is provided with a vehicle body and a mud guard device to be attached to the vehicle body. The mud guard device has a cylindrical support pipe fixed to the vehicle body, a support shaft that is supported by being inserted into the support pipe, and a mud guard supported by the support shaft. The support pipe has a recessed part that extends in a circumferential direction about an axial center of the support pipe, and the support shaft has a first protruding part disposed on an outer surface. Due to the support shaft being rotated about the axial center, the first protruding part is able to move between a first position where the first protruding part is inserted into the recessed part, and a second position where the first protruding part is disposed outside of the recessed part.

A work vehicle according to a second aspect of the invention is provided with a vehicle body and a mud guard device to be attached to the vehicle body. The mud guard device has a support shaft fixed to the vehicle body, a cylindrical support pipe that is supported by the support shaft being inserted therein, and a mud guard supported by the support pipe. The support pipe has a first protruding part disposed on an inner surface, and the support shaft has a recessed part that extends in a circumferential direction about an axial center of the support pipe. Due to the support shaft being rotated about the axial center, the first protruding part is able to move between a first position where the first protruding part is inserted into the recessed part, and a second position where the first protruding part is disposed outside of the recessed part.

Preferred embodiments regarding the first and second aspect are defined in dependent claims 3 to 9.

In a preferred embodiment, the mud guard device has an attachment part disposed between the support shaft and the mud guard, and a handle attached to the attachment part, and the handle includes a gripping part that is gripped by a hand of a worker.

In a preferred embodiment, the first protruding part is positioned in the first position, a center of gravity of an assembly made up of the support shaft and members supported by the support shaft among the mud guard device, is spaced away from the axial center in a vertical direction.

In a preferred embodiment, when the first protruding part is positioned in the second position, the gripping part overlaps a center of gravity of an assembly made up of the support shaft and members supported by the support shaft among the mud guard device, in a vertical direction.

In a preferred embodiment, the mud guard device has a support plate that is continuous with the support pipe, and a coupling tool that couples the support plate and the attachment part.

In a preferred embodiment, the support shaft has a second protruding part disposed on the outer surface, the support pipe includes a cylindrical part into which the support shaft is inserted, and a receiving part in which the recessed part is formed, and when the first protruding part is positioned in the first position, the second protruding part abuts the receiving part and the first protruding part is spaced away from an inner circumferential surface of the recessed part.

In a preferred embodiment, the support pipe has a second protruding part disposed on the inner surface, the support shaft has a receiving part formed in an insertion part inserted into the support pipe, and when the first protruding part is positioned in the first position, the second protruding part abuts the receiving part and the first protruding part is spaced away from an inner circumferential surface of the recessed part.

In a preferred embodiment, a receiving surface of the receiving part is formed substantially horizontally, the receiving surface abuts the second protruding part.

A work vehicle according to a third aspect of the invention comprises a vehicle body, and a mud guard device attached to the vehicle body, wherein the mud guard device has a support shaft fixed to the vehicle body, a cylindrical support pipe supported by the support shaft being inserted therein, and a mud guard supported by the support pipe. The support shaft has a first protruding part disposed on an outer surface, and the support pipe has a recessed part that extends in a circumferential direction about an axial center of the support pipe. Due to the support pipe being rotated about the axial center, the first protruding part is able to move between a first position where the first protruding part is inserted into the recessed part, and a second position where the first protruding part is disposed outside of the recessed part.

A work vehicle according to a fourth aspect of the invention comprises a vehicle body, and a mud guard device attached to the vehicle body, wherein the mud guard device has a support shaft fixed to the vehicle body, a cylindrical support pipe supported by the support shaft being inserted therein, and a mud guard supported by the support pipe. The support shaft has a recessed part that extends in a circumferential direction about an axial center of the support pipe, and the support pipe has a first protruding part disposed on an inner surface. Due to the support pipe being rotated about the axial center, the first protruding part is able to move between a first position where the first protruding part is inserted into the recessed part, and a second position where the first protruding part is disposed outside of the recessed part.

### Effect of the Invention

According to the present invention, there is provided a work vehicle and a method for attaching/detaching a mud guard with which a mud guard can be easily attached and detached.

### Brief Description of Drawings

FIG. 1 is a side view of a wheel loader according to an embodiment.
FIG. 2 is a perspective view of an engine hood according to the embodiment.
FIG. 3 is a perspective view of a mud guard device according to the embodiment.
FIG. 4 is a perspective view of the mud guard device according to the embodiment.
FIG. 5 is a rear view of a support part and a support shaft according to the embodiment.
FIG. 6 is a sectional view A-A of FIG. 4.
FIG. 7 is a view for explaining a method for attaching/detaching the mud guard according to the embodiment.
FIG. 8 is a view for explaining the method for attaching/detaching the mud guard according to the embodiment.
FIG. 9 is a view for explaining the method for attaching/detaching the mud guard according to the embodiment.
FIG. 10 is a view for explaining the method for attaching/detaching the mud guard according to the embodiment.

### Description of Embodiments

A wheel loader 1 according to an embodiment of the present invention will be explained below with reference to the drawings. The wheel loader 1 is an example of a "work vehicle" according to the present invention.

In the following explanations, "up," "down," "front," "rear," "left," and "right" indicate directions relative to a state of looking forward from the driver's seat. The "up-down direction" signifies the vertical direction. The "front-back direction" signifies the front-back direction of the vehicle. The "vehicle width direction" signifies the left-right direction of the vehicle.

### (Wheel loader 1)

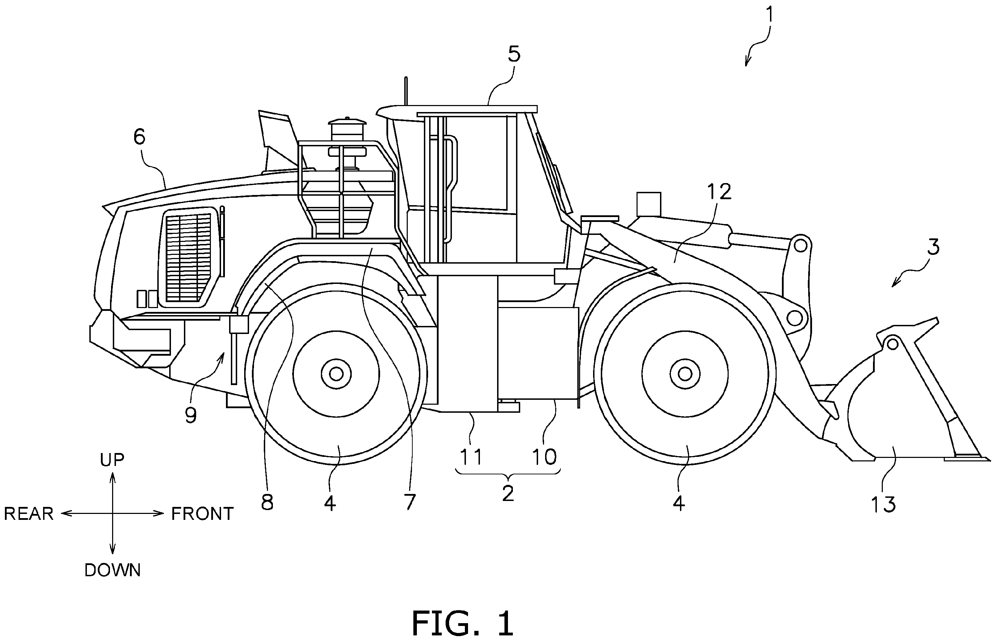

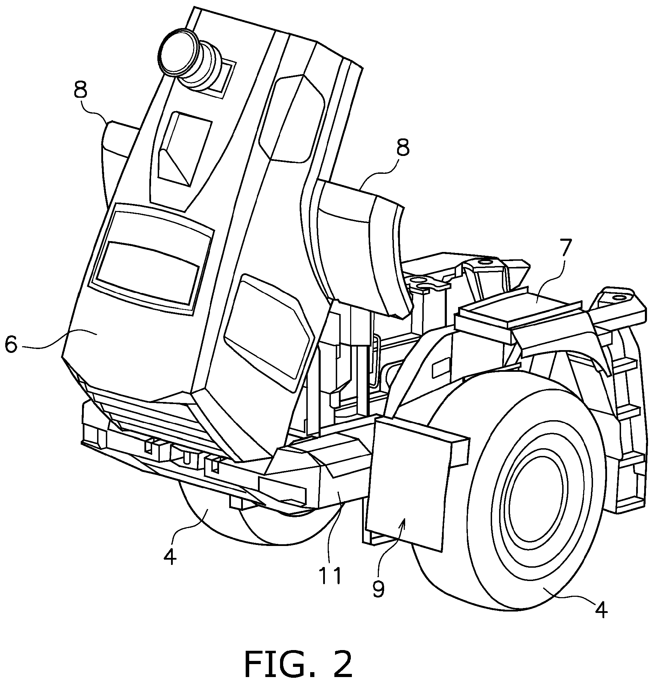

FIG. 1 is a side view seen from the right side of the wheel loader 1 according to the embodiment. FIG. 2 is a perspective view of the rear side of the wheel loader 1 as seen from the right rear.

The wheel loader 1 is provided with a vehicle body frame 2, a work implement 3, a plurality of traveling wheels 4, a cab 5, an engine hood 6, a pair of left and right steps 7, a pair of left and right fenders 8, and a pair of left and right mud guard devices 9. However, only the ones disposed on the right side among the plurality of traveling wheels 4, the pair of left and right steps 7, the pair of left and right fenders 8, and the pair of left and right mud guard devices 9 are depicted in FIG. 1.

The vehicle body frame 2 is an articulated type and includes a front frame 10 and a rear frame 11. The front frame 10 is disposed in front of the rear frame 11.

The work implement 3 is mounted to a front part of the front frame 10. The work implement 3 includes a boom 12 and a bucket 13. The boom 12 is rotatably attached to the front frame 10. The bucket 13 is rotatably attached to the tip of the boom 12.

One pair of left and right traveling wheels 4 are attached to the left and right of the front frame 10. One pair of left and right traveling wheels 4 are attached to the left and right of the rear frame 11.

The cab 5 is disposed on the rear frame 11. An operator's seat, various operating members, and a display device, etc. are disposed inside the cab 5.

The engine hood 6 is disposed to the rear of the cab 5. Various apparatuses such as an engine are contained inside the engine hood 6. As illustrated in FIG. 2, the engine hood 6 is a tilting type and the front end part thereof is lifted upward and rearward.

The steps 7 are disposed above the traveling wheels 4 attached to the rear frame 11. As illustrated in FIG. 2, the steps 7 are fixed to the rear frame 11. The steps 7 are used during maintenance work or the like performed by a worker.

The fenders 8 are disposed above and to the rear of the traveling wheels 4 attached to the rear frame 11. The fenders 8 are disposed so as to extend to the rear from the rear end of the steps 7. As illustrated in FIG. 2, the fenders 8 are attached to the engine hood 6.

The mud guard devices 9 are disposed to the rear of the traveling wheels 4 attached to the rear frame 11. The mud guard devices 9 are disposed so as to extend downward from a rear end part of each fender 8. The mud guard devices 9 limit the upward rise of mud, stones, water, etc. from the traveling wheels 4. The mud guard devices 9 are attached to the rear frame 11 of the wheel loader 1. However, the mud guard devices 9 may be attached to the vehicle body of the wheel loader 1. The vehicle body of the wheel loader 1 signifies a portion other than the work implement 3 and the traveling wheels 4.

### (Configuration of the mud guard devices 9)

The pair of left and right mud guard devices 9 have a right-left symmetrical configuration and, therefore, the following is an explanation of the configuration of the mud guard device 9 on the right side illustrated in FIG. 1 and 2.

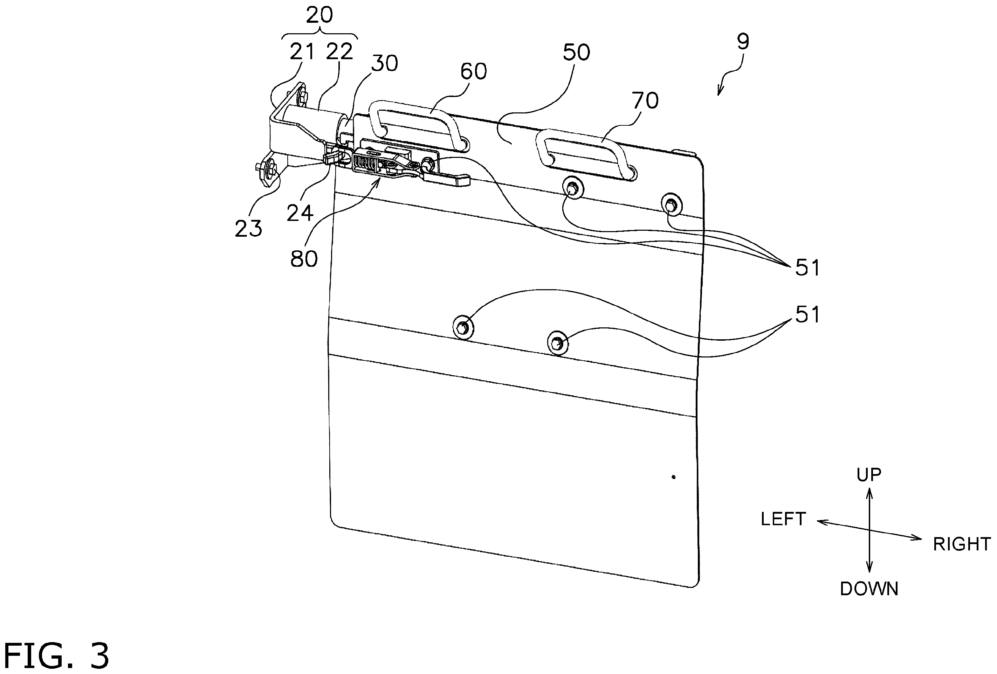

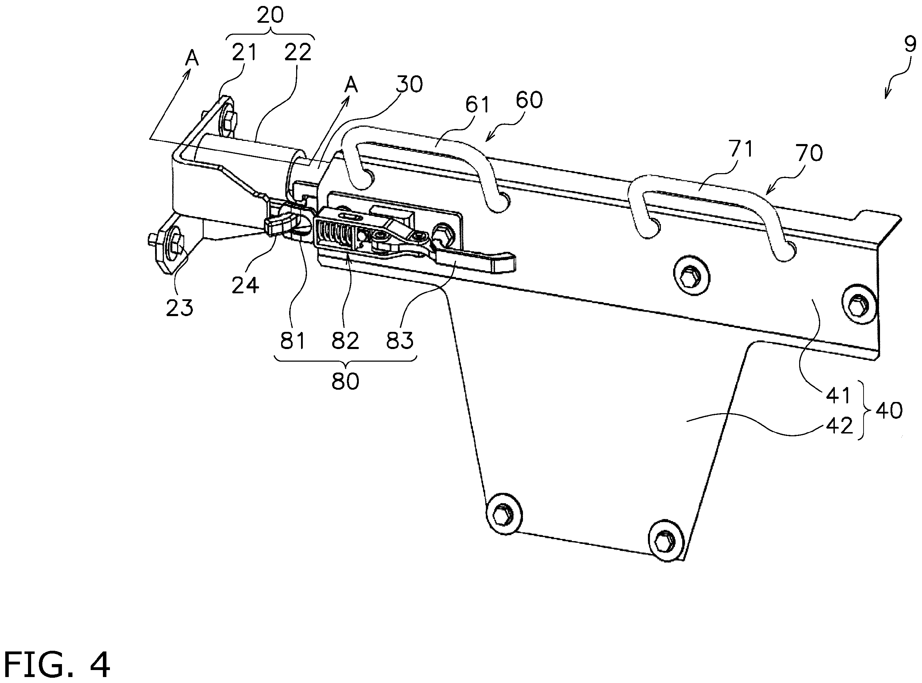

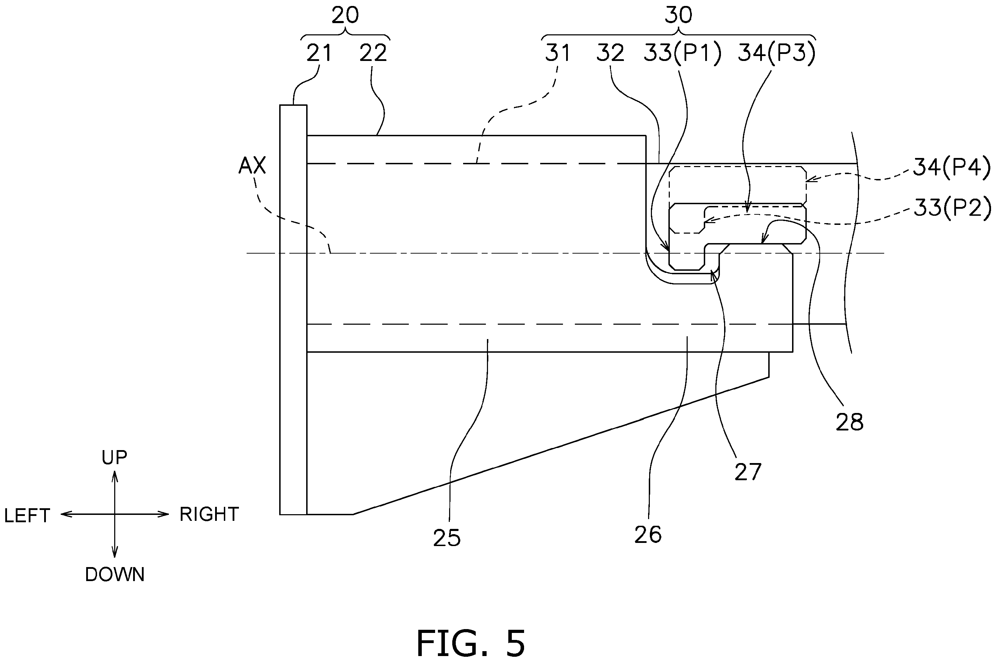

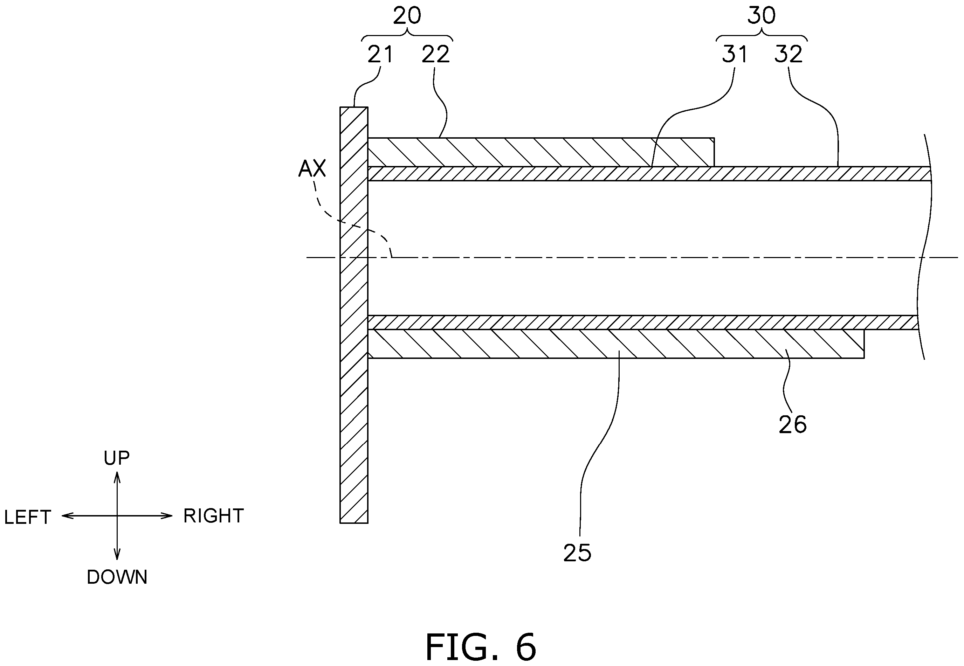

FIG. 3 is a perspective view of the mud guard device 9 as seen from the right side and the rear. FIG. 4 is a perspective view of the mud guard device 9 as seen from the right side and the rear while a mud guard 50 is removed. FIG. 5 is a rear view of a support part 20 and a support shaft 30 as seen from the rear. FIG. 6 is a sectional view A-A of FIG. 4.

The mud guard device 9 is provided with the support part 20, the support shaft 30, an attachment part 40, the mud guard 50, a left handle 60, a right handle 70, and a fastener 80.

### 1. Support part 20

The support part 20 has a support plate 21 and a cylindrical support pipe 22.

The support plate 21 is configured by a plate member. The support plate 21 is fixed to the rear frame 11 (see FIG. 2). While the support plate 21 is fixed to the rear frame 11 by a plurality of bolts 23 as illustrated in FIG. 3 and 4, the support plate 21 may also be welded to the rear frame 11.

The support plate 21 has a locking part 24 that protrudes to the right side. The fastener 80 is locked to the locking part 24.

The support pipe 22 is fixed to the rear frame 11 via the support plate 21. Although the support pipe 22 is welded to the support plate 21 as illustrated in FIG. 5 and 6, the support pipe 22 may be fixed to the support plate 21 with a bolt. Further, the support pipe 22 may be fixed directly to the rear frame 11.

The support pipe 22 has a cylindrical part 25 and a receiving part 26 as illustrated in FIG. 5 and 6.

The cylindrical part 25 is formed in a cylindrical shape. A first portion 31 of the below mentioned support shaft 30 is inserted into the cylindrical part 25. The cylindrical part 25 extends along a center axis AX. In the present embodiment, while the center axis AX is approximately parallel to the vehicle width direction, the center axis AX may also be slanted with respect to the vehicle width direction. The length of the cylindrical part 25 in the axial direction (direction parallel to the center axis AX) can be changed as appropriate. The diameter of the cylindrical part 25 in the radial direction (direction perpendicular to the center axis AX) can be changed as appropriate.

The receiving part 26 is continuous with the cylindrical part 25. The receiving part 26 protrudes in the center axis direction from a right end part of the cylindrical part 25. The receiving part 26 is partially formed in a cylindrical shape. The receiving part 26 has a shape that is curved in the circumferential direction about the center axis AX.

As illustrated in FIG. 5, a recessed part 27 is formed in the receiving part 26. The recessed part 27 extends in the circumferential direction. In the present embodiment, the recessed part 27 is formed as a recessed shape that points downward and is open upward and to the rear. A first protruding part 33 of the below mentioned support shaft 30 is inserted into the recessed part 27.

As illustrated in FIG. 5, the receiving part 26 has a receiving surface 28. The receiving surface 28 abuts a second protruding part 34 of the below mentioned support shaft 30. In the present embodiment, the receiving surface 28 is the upper surface of the receiving part 26 and is formed approximately horizontally. Therefore, the receiving surface 28 can be easily formed because the receiving surface 28 only needs to be shaped with reference to the horizontal direction.

### 2. Support shaft 30

The support shaft 30 is supported by being inserted into the support pipe 22. The support shaft 30 is able to rotate about the center axis AX.

As illustrated in FIG. 5, the support shaft 30 has the first portion 31, a second portion 32, the first protruding part 33, and the second protruding part 34.

The first portion 31 is formed in a cylindrical shape. The first portion 31 is inserted into the support pipe 22. The first portion 31 extends in the axial direction of the support pipe 22. The axial center of the first portion 31 matches the center axis AX of the support pipe 22. As illustrated in FIG. 6, one end part (the left end part) of the first portion 31 abuts the support plate 21 of the support part 20.

The second portion 32 is continuous with the first portion 31. The second portion 32 is a portion of the support shaft 30 and the second portion 32 is exposed from the support pipe 22. The second portion 32 is formed in a cylindrical shape. The second portion 32 extends in the vehicle width direction. In the second portion 32, the region that slides along at least the receiving part 26 of the support pipe 22 only needs to be formed as a cylindrical surface. However, the shape of the second portion 32 is not limited in particular. The second portion 32 may entirely or partially curved or bent and may have a shape other than a cylindrical shape.

The first protruding part 33 is an example of a "first protruding part" or a "protruding part" according to the present invention. The first protruding part 33 is disposed on the outer surface of the second portion 32. The first protruding part 33 is inserted into the recessed part 27 formed in the receiving part 26 of the support pipe 22. In this case, the first protruding part 33 is spaced away from the inner circumferential surface of the recessed part 27. While the first protruding part 33 has a rectangular shape as illustrated in FIG. 5, the shape is not limited thereto.

Due to the rotation of the support shaft 30 about the center axis AX, the first protruding part 33 is able to move between a first position P1 (solid line in FIG. 5) where the first protruding part 33 is inserted in the recessed part 27, to a second position P2 (dashed line in FIG. 5) where the first protruding part 33 is disposed outside of the recessed part 27. The action for moving the first protruding part 33 between the first position P1 and the second position P2 is explained below.

The second protruding part 34 is an example of a "second protruding part" according to the present invention. The second protruding part 34 is disposed on the outer surface of the second portion 32. The second protruding part 34 abuts the receiving surface 28 of the receiving part 26 within the support pipe 22. While the second protruding part 34 has a rectangular shape as illustrated in FIG. 5, the shape is not limited thereto. In addition, while the second protruding part 34 is continuous with the first protruding part 33, the second protruding part 34 may be separate from the first protruding part 33.

Due to the rotation of the support shaft 30 about the center axis AX, the second protruding part 34 is able to move between a third position P3 (solid line in FIG. 5) where the second protruding part 34 abuts the receiving surface 28 of the receiving part 26, and a fourth position P4 (dashed line in FIG. 5) where the second protruding part 34 is spaced away from the receiving surface 28 of the receiving part 26. The action of the movement of the second protruding part 34 between the third position P3 and the fourth position P4 is explained below.

### 3. Attachment part 40

As illustrated in FIG. 3, the attachment part 40 is disposed between the support shaft 30 and the mud guard 50. As illustrated in FIG. 4, the attachment part 40 has a base part 41 and an extension part 42.

The base part 41 is fixed to the second portion 32 of the support shaft 30. The base part 41 is configured by a plate member. The base part 41 extends along the cylindrical second portion 32. However, the shape of the base part 41 is not limited in particular.

The extension part 42 is a member for suppressing swinging of the mud guard 50. The extension part 42 is disposed in front of the mud guard 50. The extension part 42 extends downward from the base part 41. The extension part 42 is formed in a tabular shape. However, the shape of the extension part 42 is not limited in particular.

### 4. Mud guard 50

As illustrated in FIG. 3, the mud guard 50 is supported by the support shaft 30. In the present embodiment, the mud guard 50 is supported by the support shaft 30 via the attachment part 40. The mud guard 50 is fixed to the attachment part 40 with a plurality of bolts 51.

The mud guard 50 is formed as a sheet. The mud guard 50 is flexible. The mud guard 50 can be configured by, for example, synthetic rubber.

### 5. Left handle 60 and right handle 70

The left handle 60 and the right handle 70 are each an example of a "handle" according to the present invention. As illustrated in FIG. 4, the left handle 60 is disposed beside (on the left side) the right handle 70. The left handle 60 and the right handle 70 are both formed in a U-shape.

The left handle 60 has a left gripping part 61 to be gripped by the left hand of a worker. The left gripping part 61 is formed in a cylindrical shape and extends in the vehicle width direction. The right handle 70 has a right gripping part 71 to be gripped by the right hand of the worker. The right gripping part 71 is formed in a cylindrical shape and extends in the vehicle width direction.

The left handle 60 and the right handle 70 are both attached to the base part 41 of the attachment part 40. The left handle 60 and the right handle 70 may be welded or may be fixed with bolts to the base part 41 of the attachment part 40.

### 6. Fastener 80

The fastener 80 is an example of a "coupling tool" according to the present invention. The fastener 80 couples the support plate 21 and the attachment part 40. The fastener 80 is provided for preventing the mud guard 50 from falling off due to vibrations, etc. during traveling.

As illustrated in FIG. 4, the fastener 80 has a hook 81, a pulling mechanism 82, and an operating lever 83.

The hook 81 locks with the locking part 24 of the support plate 21. The pulling mechanism 82 pulls the hook 81 locked with the locking part 24 to the right. The pulling mechanism 82 can be configured by using an elastic member such as a spring. The operating lever 83 is a member for operating the pulling mechanism 82. When a worker pushes the operating lever 83 toward the attachment part 40, the hook 81 is locked to the locking part 24. When the worker pulls the operating lever 83 to the rear, the locking of the hook 81 is released.

### (Method for attaching/detaching mud guard 50)

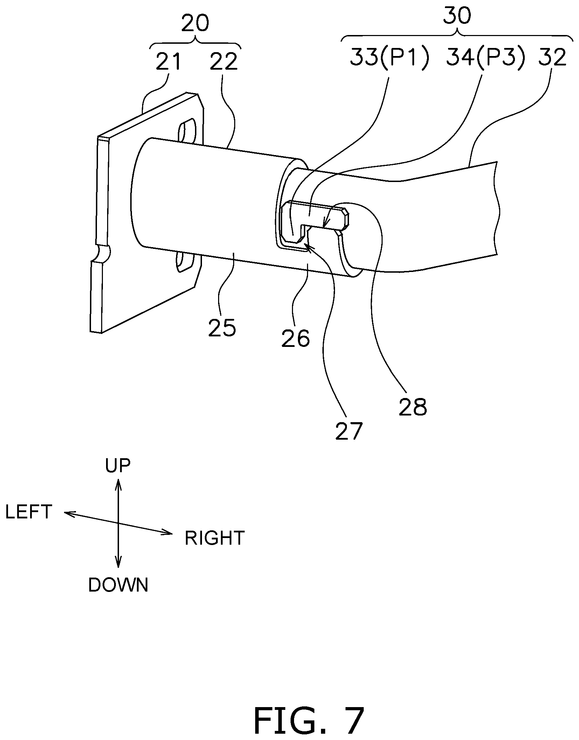

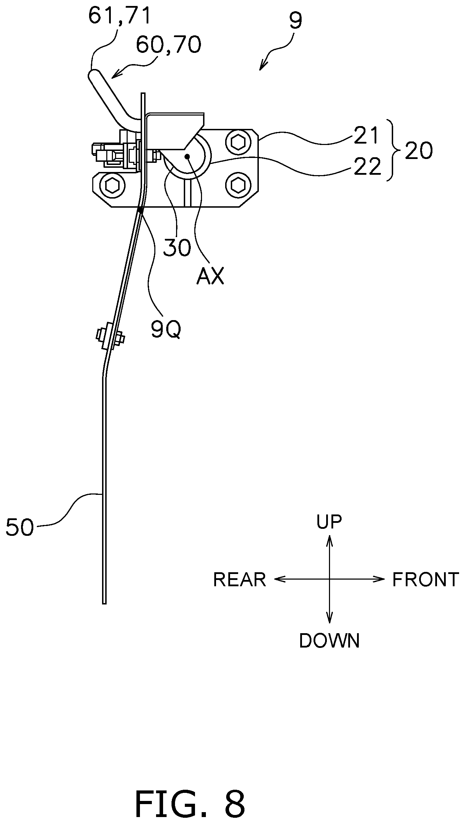

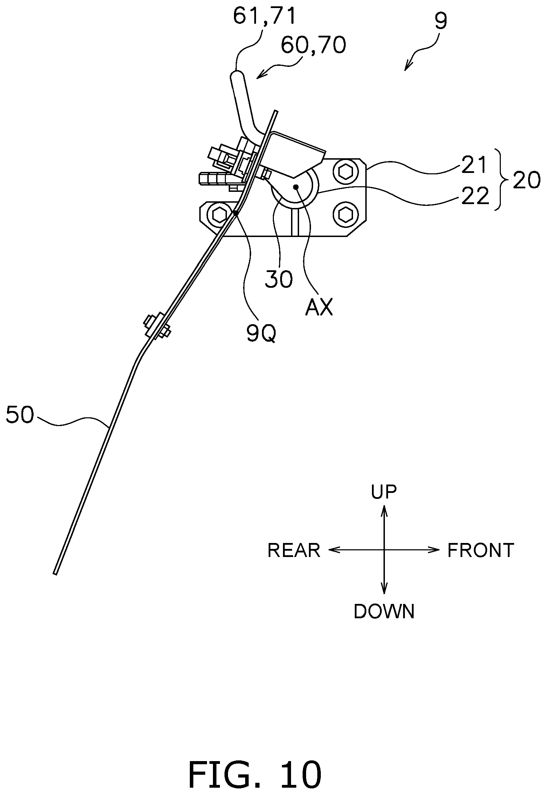

A method for attaching/detaching the mud guard 50 is explained with reference to FIG. 7 to 10. FIG. 8 and 10 are side views viewing the mud guard device 9 from the axial direction.

### 1. Method for removing mud guard 50

First, as illustrated in FIG. 7, the first protruding part 33 of the support shaft 30 is positioned in the first position P1 where the first protruding part 33 is inserted into the recessed part 27. At this time, the second protruding part 34 of the support shaft 30 is positioned in the third position P3 where the second protruding part 34 abuts the receiving surface 28 of the receiving part 26. The first protruding part 33 is spaced away from the inner circumferential surface of the recessed part 27.

Here, when the first protruding part 33 is positioned in the first position P1, as illustrated in FIG. 8, a center of gravity 9Q of an assembly of members of the mud guard device 9 supported by the support shaft 30 is spaced away from the center axis AX of the support pipe 22 in the vertical direction. The center of gravity 9Q does not overlap the center axis AX in the vertical direction. As a result, the second protruding part 34 can be urged toward the receiving surface 28. In the present embodiment, the assembly of the support shaft 30 and the members supported by the support shaft 30 signifies all of the members of the mud guard device 9 except for the support part 20.

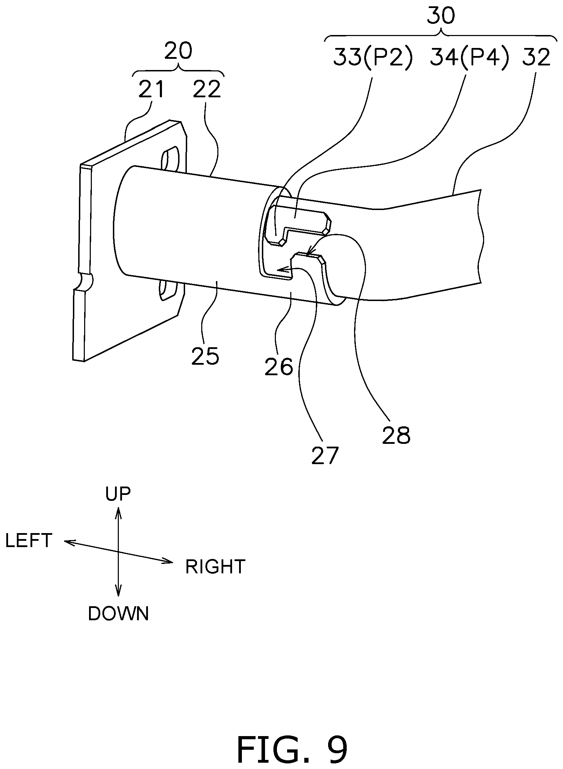

Next, the support shaft 30 is rotated about the center axis AX of the support pipe 22 (first step). The worker is able to rotate the support shaft 30 by gripping and lifting up the left gripping part 61 of the left handle 60 and the right gripping part 71 of the right handle 70. As a result, as illustrated in FIG. 9, the first protruding part 33 moves to the second position P2 where the first protruding part 33 is disposed outside of the recessed part 27. In addition, the second protruding part 34 moves to the fourth position P4 where the second protruding part 34 is spaced away from the receiving surface 28 of the receiving part 26.

When the first protruding part 33 is positioned in the second position P2, as illustrated in FIG. 10, the left gripping part 61 and the right gripping part 71 overlap the center of gravity 9Q of the assembly in the vertical direction. In the example illustrated in FIG. 10, the left gripping part 61 and the right gripping part 71 are positioned vertically above the center of gravity 9Q of the assembly. As a result, the worker is able to intuitively understand that the first protruding part 33 has moved out of the recessed part 27 because the assembly is stabilized at the point in time that the first protruding part 33 has moved to the second position P2.

Next, the mud guard 50 is removed by pulling the support shaft 30 out from the support pipe 22 (second step). The worker is able to pull the support shaft 30 out from the support pipe 22 by gripping and moving the left gripping part 61 and the right gripping part 71 to the right.

Thereafter, the worker is able to perform maintenance work on the wheel loader 1 while the mud guard 50 is removed.

### 2. Method for attaching mud guard 50

First, the support shaft 30 is inserted into the support pipe 22 (third step). The worker is able to insert the support shaft 30 into the support pipe 22 by gripping and moving the left gripping part 61 and the right gripping part 71 to the left. At this time, as illustrated in FIG. 9, the first protruding part 33 is positioned in the second position P2 and the second protruding part 34 is positioned in the fourth position P4.

Next, the worker attaches the mud guard 50 by rotating the support shaft 30 about the center axis AX of the support pipe 22 (fourth step). The worker may only lower the left gripping part 61 and the right gripping part 71 while gripping the left gripping part 61 and the right gripping part 71. At this time, as illustrated in FIG. 7, the first protruding part 33 moves from the second position P2 to the first position P1 and the second protruding part 34 moves from the fourth position P4 to the third position P3.

### (Characteristics)

The mud guard device 9 according to the present embodiment has the cylindrical support pipe 22, the support shaft 30 that is supported by being inserted into the support pipe 22, and the mud guard 50 supported by the support shaft 30. Therefore, the mud guard 50 can be attached and detached easily by inserting and removing the support pipe 22 from the support shaft 30 without using a tool.

The support shaft 30 includes the first protruding part 33 that is disposed on the outer surface. The support pipe 22 includes the recessed part 27 that extends in the circumferential direction. Due to the rotation of the support shaft 30 about the center axis AX, the first protruding part 33 is able to move between the first position P1 where the first protruding part 33 is inserted in the recessed part 27 and the second position P2 where the first protruding part 33 is disposed outside of the recessed part 27. Because the first protruding part 33 is inserted into the recessed part 27 in this way, the matter of the mud guard 50 unintentionally falling off due to vibrations or the inclination of the vehicle body can be suppressed.

### (Other embodiments)

Although an embodiment of the present invention has been described so far, the present invention is not limited to the above embodiment and various modifications may be made within the scope of the invention, as defined by the appended claims.

(A) While the support shaft 30 has the first protruding part 33 and the support pipe 22 has the recessed part 27 in the above embodiment, the support shaft 30 may not have the first protruding part 33 and the support pipe 22 may not have the recessed part 27. Even in this case, the mud guard 50 can be attached and detached easily by inserting and removing the support pipe 22 from the support shaft 30.
(B) While the support shaft 30 has the first protruding part 33 and the support pipe 22 has the recessed part 27 in the above embodiment, the support pipe 22 may have the first protruding part 33 and the support shaft 30 may have the recessed part 27. In this case, the first protruding part 33 may be disposed on the inner surface of the support pipe 22 and the recessed part 27 may be disposed on the outer surface of the support shaft 30.
(C) While the support shaft 30 has the second protruding part 34 disposed on the outer surface of the second portion 32 in the above embodiment, the support shaft 30 may not have the second protruding part 34. In this case, the first protruding part 33 abuts the inner circumferential surface of the recessed part 27.
(D) While the mud guard device 9 has the attachment part 40 in the above embodiment, the mud guard device 9 may not have attachment part 40. In this case, the mud guard 50, the left handle 60, the right handle 70, and the fastener 80 etc., may be attached directly to the support shaft 30.
(E) While the mud guard device 9 has the left handle 60, the right handle 70, and the fastener 80 in the above embodiment, the mud guard device 9 may only have at least one of said members.
(F) While the support part 20 has the support plate 21 in the above embodiment, the support part 20 may not have the support plate 21. In this case, the locking part 24 may be fixed to the support pipe 22.
(G) While the support pipe 22 is fixed to the vehicle body in the above embodiment, the support shaft 30 may be fixed to the vehicle body. The support pipe 22 is supported by the support shaft 30 being inserted therein, and the mud guard 50 is supported by the support pipe 22. In this case, the support shaft 30 may have a recessed part that extends in the circumferential direction, and the support pipe 22 may have a first protruding part disposed on the inner surface. Alternatively, the support shaft 30 may have the first protruding part disposed on the outer surface thereof, and the support pipe 22 may have the recessed part that extends in the circumferential direction. The mud guard 50 supported by the support pipe 22 can be removed by pulling the cylindrical support pipe 22, which is supported by the support shaft 30 fixed to the vehicle body being inserted therein, out from the support shaft 30. Moreover, the mud guard 50 can be attached by inserting the support pipe 22 into the support shaft 30.
(H) While the wheel loader 1 has been explained as an example of the work vehicle in the above embodiment, the structure of the mud guard device 9 according to the present invention is widely applicable to other work vehicles such as a forklift and the like.

### List of Reference Numerals

- 1:: Wheel loader (example of work vehicle)
- 9:: Mud guard device
- 20:: Support part
- 21:: Support plate
- 22:: Support pipe
- 25:: Cylindrical part
- 26:: Receiving part
- 27:: Recessed part
- 28:: Receiving surface
- AX:: Axial center of support pipe
- 30:: Support shaft
- 31:: First portion
- 32:: Second portion
- 33:: First protruding part (example of protruding part)
- P1:: First position
- P2:: Second position
- 34:: Second protruding part
- P3:: Third position
- P4:: Fourth position
- 40:: Attachment part
- 50:: Mud guard
- 60:: Left handle
- 70:: Right handle
- 80:: Fastener

## Claims

1. A work vehicle (1) comprising:
a vehicle body, and
a mud guard device (9) attached to the vehicle body, wherein
the mud guard device (9) has
a cylindrical support pipe (22) fixed to the vehicle body,
a support shaft (30) supported by being inserted into the support pipe (22) , and
a mud guard (50) supported by the support shaft (30),
wherein the support pipe (22) has a recessed part (27) that extends in a circumferential direction about an axial center (AX) of the support pipe (22), and
wherein the support shaft (30) has a first protruding part (33) disposed on an outer surface, **characterized in that**
due to the support shaft (30) being rotated about the axial center (AX), the first protruding part (33) is able to move between a first position (P1) where the first protruding part (33) is inserted into the recessed part (27), and a second position (P2) where the first protruding part (33) is disposed outside of the recessed part (27).

2. A work vehicle (1) comprising:
a vehicle body, and
a mud guard device (9) attached to the vehicle body, wherein
the mud guard device (9) has
a cylindrical support pipe (22) fixed to the vehicle body,
a support shaft (30) supported by being inserted into the support pipe (22) , and
a mud guard (50) supported by the support shaft (30),
wherein the support pipe (22) has a first protruding part (33) disposed on an inner surface, and
wherein the support shaft (30) has a recessed part (27) that extends in a circumferential direction about an axial center (AX) of the support pipe (22), **characterized in that**
due to the support shaft (30) being rotated about the axial center (AX), the first protruding part (33) is able to move between a first position (P1) where the first protruding part (33) is inserted into the recessed part (27), and a second position (P2) where the first protruding part (33) is disposed outside of the recessed part (27).

3. The work vehicle (1) according to claim 1 or 2, wherein
the mud guard device (9) has an attachment part (40) disposed between the support shaft (30) and the mud guard (50), and a handle (60, 70) attached to the attachment part (40), and
the handle (60, 70) includes a gripping part that is gripped by a hand of a worker.

4. The work vehicle (1) according to claim 3, wherein
when the first protruding part (33) is positioned in the first position (P1), a center of gravity of an assembly made up of the support shaft (30) and members supported by the support shaft (30) among the mud guard device (9), is spaced away from the axial center (AX) in a vertical direction.

5. The work vehicle (1) according to claim 3 or 4, wherein
when the first protruding part (33) is positioned in the second position (P2), the gripping part overlaps a center of gravity of an assembly made up of the support shaft (30) and members supported by the support shaft (30) among the mud guard device (9), in a vertical direction.

6. The work vehicle (1) according to any one of claims 4 to 5, wherein
the mud guard device (9) has a support plate (21) that is continuous with the support pipe (22), and a coupling tool that couples the support plate (21) and the attachment part (40).

7. The work vehicle (1) according to claim 1, wherein
the support shaft (30) has a second protruding part (34) disposed on the outer surface,
the support pipe (22) includes a cylindrical part (25) into which the support shaft (30) is inserted, and a receiving part (26) in which the recessed part (27) is formed, and
when the first protruding part (33) is positioned in a first position (P1), the second protruding part (34) abuts the receiving part (26) and the first protruding part (33) is spaced away from an inner circumferential surface of the recessed part (27).

8. The work vehicle (1) according to claim 2, wherein
the support pipe (22) has a second protruding part (34) disposed on the inner surface,
the support shaft (30) has a receiving part (26) formed in an insertion part inserted into the support pipe (22), and
when the first protruding part (33) is positioned in a first position (P1), the second protruding part (34) abuts the receiving part (26) and the first protruding part (33) is spaced away from an inner circumferential surface of the recessed part (27).

9. The work vehicle (1) according to claim 7 or 8, wherein
a receiving surface of the receiving part (26) is formed substantially horizontally,
the receiving surface abuts the second protruding part (34).

10. A work vehicle (1) comprising:
a vehicle body, and
a mud guard device (9) attached to the vehicle body, wherein
the mud guard device (9) has
a support shaft (30) fixed to the vehicle body,
a cylindrical support pipe (22) supported by the support shaft (30) being inserted therein, and
a mud guard (50) supported by the support pipe (22), **characterized in that**
the support shaft (30) has a first protruding part (33) disposed on an outer surface, and
wherein the support pipe (22) has a recessed part (27) that extends in a circumferential direction about an axial center (AX) of the support pipe (22), due to the support pipe (22) being rotated about the axial center (AX), the first protruding part (33) is able to move between a first position (P1) where the first protruding part (33) is inserted into the recessed part (27), and a second position (P2) where the first protruding part (33) is disposed outside of the recessed part (27).

11. A work vehicle (1) comprising:
a vehicle body, and
a mud guard device (9) attached to the vehicle body, wherein
the mud guard device (9) has
a support shaft (30) fixed to the vehicle body,
a cylindrical support pipe (22) supported by the support shaft (30) being inserted therein, and
a mud guard (50) supported by the support pipe (22),
wherein the support shaft (30) has a recessed part (27) that extends in a circumferential direction about an axial center (AX) of the support pipe (22), and
wherein the support pipe (22) has a first protruding part (33) disposed on an outer surface,
**characterized in that** due to the support pipe (22) being rotated about the axial center (AX), the first protruding part (33) is able to move between a first position (P1) where the first protruding part (33) is inserted into the recessed part (27), and a second position (P2) where the first protruding part (33) is disposed outside of the recessed part (27).

## Patentansprüche

1. Arbeitsfahrzeug (1) umfassend:
eine Fahrzeugkarosserie und
eine an der Fahrzeugkarosserie angebrachte Kotflügelanordnung (9), wobei die Kotflügelanordnung (9)
ein zylindrisches Stützrohr (22), das an der Fahrzeugkarosserie befestigt ist,
eine Stützwelle (30), die durch Einführen in das Stützrohr (22) gehalten wird, und
einen Kotflügel (50), der von der Stützwelle (30) getragen wird,
wobei das Stützrohr (22) ein Ausnehmungsabschnitt (27) aufweist, der sich in einer Umfangsrichtung um eine axiale Mitte (AX) des Stützrohrs (22) erstreckt, und
wobei die Stützwelle (30) ein erstes vorstehendes Teil (33) aufweist, das an einer Außenfläche angeordnet ist, **dadurch gekennzeichnet, dass**
aufgrund der Drehung der Stützwelle (30) um die axiale Mitte (AX) sich der erste vorstehende Teil (33) zwischen einer ersten Position (P1), in der der erste vorstehende Teil (33) in den Ausnehmungsabschnitt (27) eingeführt ist, und einer zweiten Position (P2), in der der erste vorstehende Teil (33) außerhalb des Ausnehmungsabschnitts (27) angeordnet ist, bewegen kann.

2. Arbeitsfahrzeug (1), umfassend:
eine Fahrzeugkarosserie und
eine an der Fahrzeugkarosserie angebrachte Kotflügelanordnung (9), wobei die Kotflügelanordnung (9)
ein zylindrisches Stützrohr (22), das an der Fahrzeugkarosserie befestigt ist,
eine Stützwelle (30), die durch Einführen in das Stützrohr (22) gehalten wird, und
einen Kotflügel (50), der von der Stützwelle (30) getragen wird,
wobei das Stützrohr (22) ein erstes vorstehendes Teil (33) aufweist, das an einer Innenfläche angeordnet ist, und
wobei die Stützwelle (30) einen Ausnehmungsabschnitt (27) aufweist, der sich in einer Umfangsrichtung um eine axiale Mitte (AX) des Stützrohrs (22) erstreckt, **dadurch gekennzeichnet, dass**
aufgrund der Drehung der Stützwelle (30) um die axiale Mitte (AX) sich der erste vorstehende Teil (33) zwischen einer ersten Position (P1), in der der erste vorstehende Teil (33) in den Ausnehmungsabschnitt (27) eingeführt ist, und einer zweiten Position (P2), in der der erste vorstehende Teil (33) außerhalb des Ausnehmungsabschnitts (27) angeordnet ist, bewegen kann.

3. Arbeitsfahrzeug (1) gemäß Anspruch 1 oder 2, wobei
die Kotflügelanordnung (9) ein Befestigungsteil (40), das zwischen der Stützwelle (30) und dem Kotflügel (50) angeordnet ist, und einen Griff (60, 70) aufweist, der an dem Befestigungsteil (40) angebracht ist, und
der Griff (60, 70) einen Griffabschnitt aufweist, der von einer Hand eines Arbeiters gegriffen wird.

4. Arbeitsfahrzeug (1) gemäß Anspruch 3, wobei
wenn der erste vorstehende Teil (33) in der ersten Position (P1) positioniert ist, ein Schwerpunkt einer Baugruppe, die aus der Stützwelle (30) und von der Stützwelle (30) getragenen Elementen der Kotflügelanordnung (9) besteht, in einer vertikalen Richtung von der axialen Mitte (AX) beabstandet ist.

5. Arbeitsfahrzeug (1) nach Anspruch 3 oder 4, wobei
wenn der erste vorstehende Teil (33) in der zweiten Position (P2) positioniert ist, der Griffabschnitt einen Schwerpunkt einer Baugruppe aus der Stützwelle (30) und von der Stützwelle (30) getragenen Elementen der Kotflügelanordnung (9) in einer vertikalen Richtung überlappt.

6. Arbeitsfahrzeug (1) nach einem der Ansprüche 4 bis 5, wobei
die Kotflügelanordnung (9) eine Stützplatte (21), die kontinuierlich mit dem Stützrohr (22) ausgebildet ist, und ein Kopplungswerkzeug aufweist, das die Stützplatte (21) und das Befestigungsteil (40) miteinander koppelt.

7. Arbeitsfahrzeug (1) gemäß Anspruch 1, wobei
die Stützwelle (30) ein zweites vorstehendes Teil (34) aufweist, das an der Außenfläche angeordnet ist,
das Stützrohr (22) einen zylindrischen Teil (25), in den die Stützwelle (30) eingeführt wird, und einen Aufnahmeteil (26) umfasst, in dem der Ausnehmungsabschnitt (27) ausgebildet ist, und
wenn der erste vorstehende Teil (33) in einer ersten Position (P1) positioniert ist, der zweite vorstehende Teil (34) an dem Aufnahmeteil (26) anliegt und der erste vorstehende Teil (33) von einer Innenumfangsfläche des Ausnehmungsabschnitts (27) beabstandet ist.

8. Arbeitsfahrzeug (1) gemäß Anspruch 2, wobei
das Stützrohr (22) einen zweiten vorstehenden Teil (34) aufweist, der an der Innenfläche angeordnet ist,
die Stützwelle (30) ein Aufnahmeteil (26) aufweist, das in einem in das Stützrohr (22) eingeführten Einführteil ausgebildet ist, und
wenn der erste vorstehende Teil (33) in einer ersten Position (P1) positioniert ist, der zweite vorstehende Teil (34) an dem Aufnahmeteil (26) anliegt und der erste vorstehende Teil (33) von einer Innenumfangsfläche des Ausnehmungsabschnitts (27) beabstandet ist.

9. Arbeitsfahrzeug (1) nach Anspruch 7 oder 8, wobei
eine Aufnahmefläche des Aufnahmeteils (26) im Wesentlichen horizontal ausgebildet ist,
die Aufnahmefläche an dem zweiten vorstehenden Teil (34) anliegt.

10. Arbeitsfahrzeug (1), umfassend:
eine Fahrzeugkarosserie und
eine an der Fahrzeugkarosserie angebrachte Kotflügelanordnung (9), wobei die Kotflügelanordnung (9)
eine an der Fahrzeugkarosserie befestigte Stützwelle (30),
ein zylindrisches Stützrohr (22), das von der Stützwelle (30) getragen wird und in diese eingeführt ist, und
einen vom Stützrohr (22) getragenen Kotflügel (50), **dadurch gekennzeichnet, dass**
die Stützwelle (30) ein erstes vorstehendes Teil (33) aufweist, das an einer Außenfläche angeordnet ist, und
wobei das Stützrohr (22) einen Ausnehmungsabschnitt (27) aufweist, der sich in einer Umfangsrichtung um eine axiale Mitte (AX) des Stützrohrs (22) erstreckt, da das Stützrohr (22) um die axiale Mitte (AX) gedreht wird, der erste vorstehende Teil (33) sich zwischen einer ersten Position (P1), in der der erste vorstehende Teil (33) in den Ausnehmungsabschnitt (27) eingeführt ist, und einer zweiten Position (P2), in der der erste vorstehende Teil (33) außerhalb des Ausnehmungsabschnitts (27) angeordnet ist, bewegen kann.

11. Arbeitsfahrzeug (1), umfassend:
eine Fahrzeugkarosserie und
eine an der Fahrzeugkarosserie angebrachte Kotflügelanordnung (9), wobei die Kotflügelanordnung (9) aufweist
eine an der Fahrzeugkarosserie befestigte Stützwelle (30),
ein zylindrisches Stützrohr (22), das von der Stützwelle (30) getragen wird und in diese eingeführt ist, und
einen von dem Stützrohr (22) getragenen Kotflügel (50), wobei die Stützwelle (30) einen Ausnehmungsabschnitt (27) aufweist, der sich in Umfangsrichtung um eine axiale Mitte (AX) des Stützrohrs (22) erstreckt, und
wobei das Stützrohr (22) ein erstes vorstehendes Teil (33) aufweist, das an einer Außenfläche angeordnet ist, **dadurch gekennzeichnet, dass**,
da sich das Stützrohr (22) um die axiale Mitte (AX) dreht, sich der erste vorstehende Teil (33) zwischen einer ersten Position (P1), in der der erste vorstehende Teil (33) in den Ausnehmungsabschnitt (27) eingeführt ist, und einer zweiten Position (P2), in der der erste vorstehende Teil (33) außerhalb des Ausnehmungsabschnitts (27) angeordnet ist, bewegen kann.

## Revendications

1. Véhicule de travail (1) comprenant :
une carrosserie de véhicule, et
un dispositif de garde-boue (9) fixé à la carrosserie du véhicule, dans lequel
le dispositif de garde-boue (9) comporte
un tube de support cylindrique (22) fixé à la carrosserie du véhicule,
un arbre de support (30) supporté par insertion dans le tube de support (22), et
un garde-boue (50) supporté par l'arbre de support (30),
dans lequel le tube de support (22) comporte une partie en retrait (27) qui s'étend dans une direction circonférentielle autour d'un centre axial (AX) du tube de support (22), et
dans lequel l'arbre de support (30) comporte une première partie saillante (33) disposée sur une surface extérieure, **caractérisé en ce que**
grâce à la rotation de l'arbre de support (30) autour du centre axial (AX), la première partie en saillie (33) peut se déplacer entre une première position (P1) où la première partie en saillie (33) est insérée dans la partie en retrait (27), et une deuxième position (P2) où la première partie saillante (33) est disposée à l'extérieur de la partie en retrait (27).

2. Véhicule de travail (1) comprenant :
une carrosserie de véhicule, et
un dispositif de garde-boue (9) fixé à la carrosserie du véhicule, dans lequel
le dispositif de garde-boue (9) comporte
un tube de support cylindrique (22) fixé à la carrosserie du véhicule,
un arbre de support (30) supporté par insertion dans le tube de support (22), et
un garde-boue (50) supporté par l'arbre de support (30),
dans lequel le tube de support (22) comporte une première partie saillante (33) disposée sur une surface intérieure, et
dans lequel l'arbre de support (30) comporte une partie en retrait (27) qui s'étend dans une direction circonférentielle autour d'un centre axial (AX) du tuyau de support (22), **caractérisé en ce que**
grâce à la rotation de l'arbre de support (30) autour du centre axial (AX), la première partie en saillie (33) peut se déplacer entre une première position (P1) où la première partie en saillie (33) est insérée dans la partie en retrait (27), et une deuxième position (P2) où la première partie en saillie (33) est disposée à l'extérieur de la partie en retrait (27).

3. Véhicule de travail (1) selon la revendication 1 ou 2, dans lequel
le dispositif de garde-boue (9) comporte une partie de fixation (40) disposée entre l'arbre de support (30) et le garde-boue (50), et une poignée (60, 70) fixée à la partie de fixation (40), et
la poignée (60, 70) comprend une partie de préhension qui est saisie par la main d'un ouvrier.

4. Véhicule de travail (1) selon la revendication 3, dans lequel
lorsque la première partie saillante (33) est positionnée dans la première position (P1), le centre de gravité d'un ensemble constitué de l'arbre de support (30) et des éléments supportés par l'arbre de support (30) parmi le dispositif de garde-boue (9) est espacé du centre axial (AX) dans une direction verticale.

5. Véhicule de travail (1) selon la revendication 3 ou 4, dans lequel
lorsque la première partie saillante (33) est positionnée dans la deuxième position (P2), la partie de préhension recouvre un centre de gravité d'un ensemble composé de l'arbre de support (30) et des éléments supportés par l'arbre de support (30) parmi le dispositif de garde-boue (9), dans une direction verticale.

6. Véhicule de travail (1) selon l'une quelconque des revendications 4 à 5, dans lequel
le dispositif garde-boue (9) comporte une plaque de support (21) qui est continue avec le tube de support (22), et un outil d'accouplement qui accouple la plaque de support (21) et la partie de fixation (40).

7. Véhicule de travail (1) selon la revendication 1, dans lequel
l'arbre de support (30) comporte une deuxième partie saillante (34) disposée sur la surface extérieure,
le tube de support (22) comprend une partie cylindrique (25) dans laquelle l'arbre de support (30) est inséré, et une partie de réception (26) dans laquelle la partie en retrait (27) est formée, et
lorsque la première partie saillante (33) est positionnée dans une première position (P1), la deuxième partie saillante (34) vient en butée contre la partie de réception (26) et la première partie saillante (33) est espacée d'une surface circonférentielle intérieure de la partie en retrait (27).

8. Véhicule de travail (1) selon la revendication 2, dans lequel
le tuyau de support (22) comporte une deuxième partie saillante (34) disposée sur la surface intérieure,
l'arbre de support (30) comporte une partie de réception (26) formée dans une partie d'insertion insérée dans le tube de support (22), et
lorsque la première partie saillante (33) est positionnée dans une première position (P1), la deuxième partie saillante (34) vient en butée contre la partie de réception (26) et la première partie saillante (33) est espacée d'une surface circonférentielle intérieure de la partie en retrait (27).

9. Véhicule de travail (1) selon la revendication 7 ou 8, dans lequel
une surface de réception de la partie de réception (26) est formée sensiblement horizontalement,
la surface de réception vient en butée contre la deuxième partie en saillie (34).

10. Véhicule de travail (1) comprenant :
une carrosserie de véhicule, et
un dispositif de garde-boue (9) fixé à la carrosserie du véhicule, dans lequel
le dispositif de garde-boue (9) comporte
un arbre de support (30) fixé à la carrosserie du véhicule,
un tube de support cylindrique (22) soutenu par l'arbre de support (30) qui y est inséré, et
un garde-boue (50) supporté par le tube de support (22), **caractérisé en ce que**
l'arbre de support (30) comporte une première partie saillante (33) disposée sur une surface extérieure, et
le tube de support (22) comporte une partie en retrait (27) qui s'étend dans une direction circonférentielle autour d'un centre axial (AX) du tube de support (22), en raison de la rotation du tube de support (22) autour du centre axial (AX), la première partie en saillie (33) est capable de se déplacer entre une première position (P1) où la première partie en saillie (33) est insérée dans la partie en retrait (27), et une deuxième position (P2) où la première partie en saillie (33) est disposée à l'extérieur de la partie en retrait (27).

11. Véhicule de travail (1) comprenant :
une carrosserie de véhicule, et
un dispositif de garde-boue (9) fixé à la carrosserie du véhicule, dans lequel
le dispositif de garde-boue (9) comporte
un arbre de support (30) fixé à la carrosserie du véhicule,
un tube de support cylindrique (22) supporté par l'arbre de support (30) inséré dans celui-ci, et
un garde-boue (50) supporté par le tube de support (22), dans lequel
l'arbre de support (30) comporte une partie en retrait (27) qui s'étend dans une direction circonférentielle autour d'un centre axial (AX) du tube de support (22), et
le tube de support (22) comporte une première partie en saillie (33) disposée sur une surface extérieure, **caractérisé en ce que**
du fait que le tube de support (22) pivote autour du centre axial (AX), la première partie saillante (33) peut se déplacer entre une première position (P1) dans laquelle la première partie saillante (33) est insérée dans la partie en retrait (27), et une deuxième position (P2) où la première partie en saillie (33) est disposée à l'extérieur de la partie en retrait (27).
